Europäisches Patentamt

European Patent Office

Office européen des brevets

(19)

(11) Veröffentlichungsnummer: **0 231 487 B1**

## (12) EUROPÄISCHE PATENTSCHRIFT

(45) Veröffentlichungstag der Patentschrift: **16.06.93**

(51) Int. Cl.5: **H04B 7/005**

(21) Anmeldenummer: **86117225.2**

(22) Anmeldetag: **10.12.86**

(54) **Autoradio mit Entzerrer in Form eines digitalen nichtrekursiven Filters.**

(30) Priorität: **12.12.85 DE 3543898**

(43) Veröffentlichungstag der Anmeldung:
**12.08.87 Patentblatt 87/33**

(45) Bekanntmachung des Hinweises auf die
Patenterteilung:
**16.06.93 Patentblatt 93/24**

(84) Benannte Vertragsstaaten:
**DE FR GB IT**

(56) Entgegenhaltungen:
**EP-A- 0 201 758**

**SIGNAL PROCESSING, Band 9, Nr. 4, Dezember 1985, Seiten 263-276, Elsevier, Amsterdam, NL; K.D. KAMMEYER: "Equalization problems in a digital FM receiver"**

**IEEE TRANSACTIONS ON ACOUSTICS, SPEECH AND SIGNAL PROCESSING, Band ASSP-31, Nr. 2, April 1983, IEEE, New York, US; J.R. TREICHLER: "A new approach to multipath correction of constant modulus signals"**

(73) Patentinhaber: **Blaupunkt-Werke GmbH
Robert-Bosch-Strasse 200
W-3200 Hildesheim(DE)**

(72) Erfinder: **Kammeyer, Karl-Dirk, Dr.-Ing.
Finkennest 6
W-2110 Buchholz (Nordheide)(DE)**
Erfinder: **Mann-Pelz, Rodolfo
Blumenau 117
W-2000 Hamburg 76(DE)**
Erfinder: **Tobergte, Wolfgang
Wohlwillstrasse 31
W-2000 Hamburg 4(DE)**

(74) Vertreter: **Eilers, Norbert, Dipl.-Phys.
Blaupunkt-Werke GmbH Robert-Bosch-Strasse 200
W-3200 Hildesheim (DE)**

**Beschreibung**

Die Erfindung betrifft ein Autoradio mit einem Entzerrer in Form eines digitalen nichtrekursiven Filters gemäß dem Oberbegriff des Anspruchs 1.

Beim Empfang von FM-Signalen tritt bekanntlich häufig das Problem einer Mehrwegeübertragung auf. Neben der direkt einfallenden Welle werden dabei noch eine oder mehrere reflektierte Wellen empfangen, die gegenüber der direkten Welle mit einer Verzögerung eintreffen. Insbesondere bei einem mobilen Empfänger - etwa ein Autoradio - mit wechselndem Empfangsort ist die Mehrwegeübertragung vielfach anzutreffen.

In der Praxis äußert sich die störende Mehrwegeübertragung bei der Wiedergabe der demodulierten NF-Signale durch starke Verzerrungen, die soweit gehen können, daß der Benutzer eines Empfängers eine Sprachwiedergabe nicht mehr verstehen kann. Da am Übertragungskanal wegen der gegebenen Örtlichkeiten und Umstände selbst keine korrigierenden Maßnahmen vorgenommen werden können, ist man bestrebt, die unvermeidbaren Verzerrungen im Empfänger durch den Einsatz eines Entzerrers zu kompensieren.

Obwohl die Theorie der auftretenden Verzerrungen mathematisch bekannt ist und sich daher umgekehrt auch die zur Kompensation der Verzerrungen erforderlichen Eigenschaften eines Entzerrers mathematisch beschreiben lassen, ist es bis heute nicht in zufriedenstellender Weise gelungen, unter wirtschaftlich vertretbaren Gesichtspunkten einen zur Verwendung in einem FM-Empfänger - insbesondere in einem Autoradio - geeigneten Entzerrer mit hinreichender Kompensation zu realisieren.

Es ist nämlich neben anderen Faktoren der entscheidende Umstand zu beachten, daß beim mobilen Empfang ein zeitvarianter Übertragungskanal vorliegt, da sich wegen des ständig wechselnden Empfangsortes sowohl die Anzahl als auch die Verzögerungszeiten der eintreffenden Wellen ebenfalls verändern. Dies bedeutet für einen optimalen Entzerrer eine ständige und extrem schnelle Anpassung der Kompensationseigenschaften des Entzerrers, die sich mit analogen Schaltungen nicht durchführen läßt.

Es ist auch schon der Vorschlag bekannt geworden (J.R. Treichler, B.G. Agee "A new Approach to Multipath Correction of constant Modulus Signals", IEEE Trans. on Acoustics, Speech and Sign. Proc., Vol. ASSP-31, 1983, Seiten 459 - 471), zur Entzerrung bei einer Mehrwegeübertragung digitale Netzwerke in Form von nichtrekursiven Filtern zu verwenden. Das Vorliegen eines zeitvarianten Übertragungskanals kann dabei im Prinzip durch Einstellung und Veränderung der Entzerrerkoeffizienten mittels eines Iterationsverfahrens berücksichtigt werden.

Der vorgeschlagenen Lösung haftet allerdings ein gravierender Nachteil an, der darin besteht, daß es erforderlich ist, jeweils einen vollständigen Koeffizientensatz mit einer extremen Vielzahl von Entzerrerkoeffizienten einzustellen. Daher scheitert eine praktischer Einsatz in Form eines konkret schaltungstechnisch realisierten Entzerrers an dem erheblichen Aufwand, der allenfalls mit nicht zu vertretenden Kosten betrieben werden kann. Ein weiteres Problem besteht darin, die ungeheuer vielen Koeffizienten zeitlich schnell genug einzustellen, um den sich ändernden Eigenschaften des Übertragungskanals Rechnung tragen zu können. So liegt der Schwerpunkt des bekannt gewordenen Vorschlages denn auch vor allem in der allgemeinen mathematisch-theoretischen Abhandlung der Kompensation von Verzerrungen bei einer Mehrwegeübertragung.

Für die weiteren Betrachtungen wird generell davon ausgegangen, daß sich die Übertragungsfunktion eines durch Mehrwegeempfang gestörten Übertragungskanals im Basisbandbereich entsprechend der folgenden Gleichung

$$H_{MW}(j\omega) = \sum_{\nu=0}^{N} \rho_\nu \cdot e^{-j(\omega\tau_\nu + \Psi_\nu)}, \qquad (1)$$

oder durch Normierung der Amplitude der direkten Welle auf "1"

$$H_{MW}(j\omega) = 1 + \sum_{\nu=1}^{N} \rho_\nu \cdot e^{-j(\omega\tau_\nu + \Psi_\nu)} \qquad (2)$$

darstellen läßt. Hierbei bedeuten $\rho_\nu$ und $\tau_\nu$ die Amplituden und Laufzeiten der reflektierten Wellen relativ zur direkten Welle und $\psi_\nu$ deren relativen Phasendrehungen (ein Verzeichnis der wichtigsten Formelzeichen befindet sich am Ende der Beschreibung).

Jeder Reflexionsvorgang kann durch die voranstehend genannten drei Parameter eindeutig beschrieben werden, und die reflektierten Anteile lassen sich mit einem Entzerrernetzwerk kompensieren, welches die nachfolgende zur Gleichung (2) inverse Übertragungsfunktion besitzt:

$$H_{EZ}(j\omega) = \frac{I}{I + \sum\limits_{\nu=I}^{N} \rho_\nu \cdot e^{-j(\omega\tau_\nu + \Psi_\nu)}} \qquad (3)$$

Aus dem Aufsatz: "Equalizationproblems in digital FM-receivers" in Signal Processing, Bd 9. Nr. 4, S 263 - 276, ist es bekannt, eine Realisierung der inversen Übertragungsfunktion gemäß der Gleichung (3) mit einfachen Mitteln zu ermöglichen.

Ein wesentlicher Gesichtspunkt dieser bekannten Lösung liegt in der Verwendung des digitalen nichtrekursiven Filters mit einer modifizierten Entzerrerstruktur, die trotz der vorhandenen Mehrwegeübertragung gezielt die Kompensation eines Zweiwegeempfangs einsetzt.

Den Arbeiten, die zu der Erfindung führten, lag die Aufgabe zugrunde, die bekannte Entzerrerstruktur zu verbessern.

Die Erfindung selbst ist durch die im Anspruch 1 angeführten Merkmale gekennzeichnet.

Die Auswirkung einer unerwünschten Mehrwegeübertragung bei FM-Signalen ist am Empfänger am Betrag der komplexen Einhüllenden (gestörtes FM-Signal nach der Basisbandmischung) erkennbar. In zweckmäßiger Ausgestaltung der Erfindung erfolgt nun die adaptive Einstellung der Entzerrerparameter durch eine Minimierung einer geeigneten Fehlerfunktion nach dem Gradientenverfahren. Dabei wird die Tatsache ausgenutzt, daß die FM-Signale in Folge von Mehrwegeempfang eine Amplitudenmodulation erfahren. Unter Aufstellung einer Zielfunktion, welche die Konstanz des Betrages der komplexen Einhüllenden beschreibt, werden die Entzerrerparameter bei Amplitudenabweichungen iterativ so eingestellt, daß der Betrag der komplexen Einhüllenden konstant bleibt. Die durch die Verzerrungen hervorgerufene Amplitudenmodulation wird also zur Kompensation der Verzerrungen ausgenutzt, wobei die Abweichung gegenüber dem ungestörten FM-Signal mit konstanter Amplitude zur Aufstellung einer geeigneten Zielfunktion herangezogen wird.

Die Einstellung der Entzerrerkoeffizienten kann in vorteilhafter Weise direkt nach Maßgabe einer Iterationsvorschrift erfolgen. Zweckmäßig ist daneben auch eine Einstellung der Entzerrerkoeffizienten über den Reflexionsfaktor, von welchem die Entzerrerkoeffizienten abhängen. Diese Lösung hat den Vorteil, daß nach einer iterativen Ermittlung des Reflexionsfaktors gleichzeitig alle Entzerrerkoeffizienten berechnet werden können, während sonst jeder Entzerrerkoeffizient für sich alleine bestimmt werden muß.

Die Ermittlung des Reflexionsfaktors erfolgt ebenfalls nach dem Gradientenverfahren. Zwei Wege sind denkbar, je nachdem, ob man den Reflexionsfaktor nach Realteil und Imaginärteil oder nach Betrag und Phase beschreibt.

Der andere Entzerrerparameter, nämlich die Verzögerung der reflektierten Welle gegenüber der direkten Welle, wird ebenfalls unter Vorgabe einer Zielfunktion bestimmt, welche von einem konstanten Betrag der komplexen Einhüllenden ausgeht.

Unabhängig davon, nach welcher Iterationsvorschrift die Entzerrerparameter berechnet werden, kommt immer der entscheidende Vorteil der Erfindung zum Tragen, daß von einer modifizierten Entzerrerstruktur ausgegangen wird, wobei jeder $x$-te Koeffizient von Null verschieden ist, während die anderen Koeffizienten Null sind. Das bedeutet eine erhebliche Reduzierung an Schaltungsaufwand. Bei 20 km "Umweg" der reflektierten Welle beträgt beispielsweise $x = 33$. Gegenüber dem eingangs erwähnten bekannten Vorschlag mit der Einstellung eines vollständigen Koeffizientensatzes des Entzerrers bedeutet das einen 33-fachen Gewinn bzw. nur 1/33-Teil des Aufwandes an erforderlichen Multiplikationen usw.

Andere zweckmäßige Ausgestaltungen und vorteilhafte Weiterbildungen der Erfindung sind in den Unteransprüchen angegeben und der Zeichnung zu entnehmen.

Nachfolgend wird die Erfindung an Hand der in der Zeichnung dargestellten Ausführungsbeispiele näher erläutert. Es zeigen:

Fig. 1     ein schematisches Blockschaltbild einer digitalen Basisbandstruktur mit einem Entzerrer in einem FM-Empfänger,

Fig. 2     ein Blockschaltbild eines nichtrekursiven Entzerrers im Basisband,

| | | |
|---|---|---|
| Fig. 3 | | ein Blockschaltbild einer Struktur zur Bildung der Abweichung e(k) am Ausgang des Entzerrers gemäß Fig. 1 und 2, |
| Fig. 4 | | ein Blockschaltbild einer Struktur zur direkten Einstellung der Entzerrerkoeffizienten, |
| Fig. 5 | | ein Blockschaltbild einer Struktur zur Identifizierung der Mehrwegeparameter im Basisband für die Ermittlung der Entzerrerkoeffizienten mit Hilfe des Reflexionsfaktors, |
| Fig. 6 | | ein Blockschaltbild einer Struktur zur Bildung der Entzerrerkoeffizienten und deren partiellen Ableitungen über die Mehrwegeparameter mittels einer Tabelle, |
| Fig. 7 | | ein schematisches Blockschaltbild zur Realisierung des $v$-ten Zustandswerts durch Interpolation 4-ter Ordnung, |
| Fig. 8 | | ein Blockschaltbild einer Struktur zur Identifizierung der Verzögerung, |
| Fig. 9 | | ein Blockschaltbild einer Struktur zur Bildung der partiellen Ableitung der $v$-ten Zustandsvariablen nach $x$, |
| Fig. 10 | | eine Tafel zur Bildung von Interpolationskoeffizienten und deren Ableitung nach $x$ mittels einer Tabelle, |
| Fig. 11 | | einen Ausschnitt aus einer Struktur des nichtrekursiven Entzerrers gemäß Fig. 2 mit Einstellung der Verzögerung mittels einer Interpolation 4-ter Ordnung, |
| Fig. 12 | | ein Blockschaltbild einer Struktur zur Identifizierung der Komponenten des komplexen Reflexionsfaktors, |
| Fig. 13 | | ein Blockschaltbild einer Struktur zur Bildung der Entzerrerkoeffizienten und deren partiellen Ableitungen über den komplexen Reflexionsfaktor, |
| Fig. 14 und 15 | | jeweils eine schematische Darstellung der Reflexionsfaktoren beim Mehrwegeempfang, und |
| Fig. 16 - 25 | | mehrere Diagramme zur Darstellung und Verdeutlichung der Kompensation von Verzerrungen beim Zweiwegeempfang(Fig. 16 - 10) und Mehrwegeempfang (Fig. 21 - 25). |

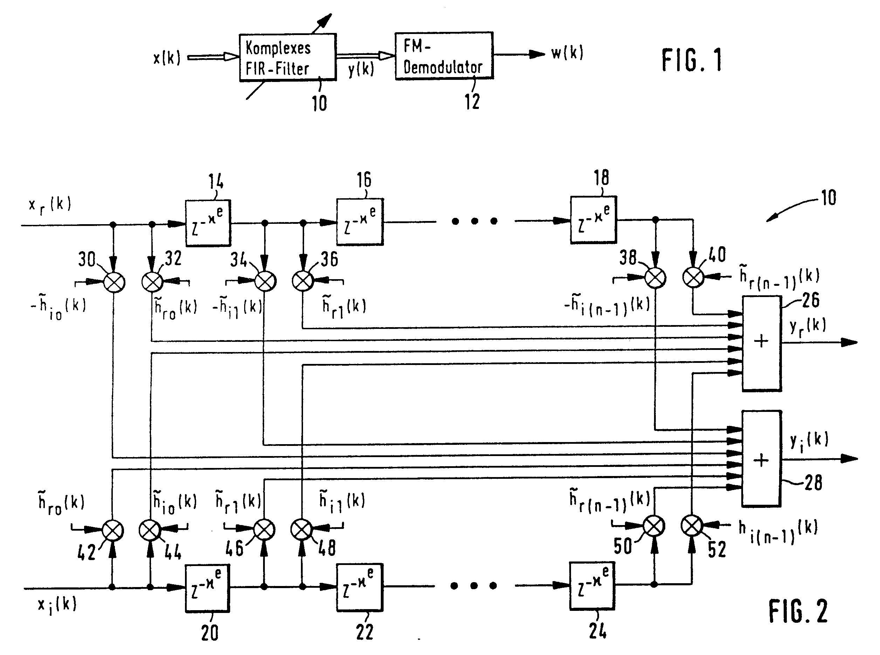

In Fig. 1 ist ein digitales nichtrekursives Filter als Entzerrer 10 dargestellt, der dem FM-Demodulator 12 eines nicht weiter gezeigten FM-Empfängers vorgeschaltet ist. Dabei wird vorausgesetzt, daß das gestörte bzw. verzerrte FM-Signal x(k) am Eingang des Entzerrers 10 nach einer Basisbandmischung vorliegt, d.h. das Frequenzband des FM-Signals ist auf das Basisband mit dem Träger Null heruntergemischt worden. Die Gleichung

$$x(k) = e^{j\phi(k)} + r \bullet e^{j\phi(k-x)} \qquad (4)$$

beschreibt das gestörte FM-Signal nach der Basisbandmischung und wird auch als komplexe Einhüllende genannt. Dabei bedeuten:

$$\varphi(k) = \Delta\Omega \int_{0}^{kT} v(\zeta)\, d\zeta \qquad ; \quad v(t) \epsilon\ [-1,1] \stackrel{\wedge}{=}\ \text{mo-}$$

$$\text{dulierendes Signal}$$

$$r = \rho \bullet e^{-j\Psi}$$

$$\Psi = \theta + \omega_0 \tau .$$

Zur adaptiven Anpassung der Entzerrerparameter des Entzerrers 10 wird die Tatsache genutzt, daß die FM-Signale in Folge eines Mehrwegeempfanges außer einer Störung der Momentanfrequenz zusätzliche eine Amplitudenmodulation erfahren. Diese Abweichung gegenüber dem ungestörten FM-Signal mit konstanter Amplitude wird zur Aufstellung einer Zielfunktion herangezogen, welche von der absoluten quadratischen Abweichung

$$F = \tfrac{1}{4} e^2(k) \ ; \ e(k)\epsilon\ |R \qquad (5)$$

$$= \frac{1}{4} \left[ \, |y(k)|^2 - |g(k)|^2 \, \right]^2 \quad ; \, y(k), \, g(k) \in \mathbb{C} \qquad (6)$$

ausgeht, wobei y(k) das gestörte Entzerrerausgangssignal und g(k) das ungestörte FM-Basisbandsignal mit der Annahme

$$|g(k)| = 1 \qquad (7)$$

bedeuten. Hiermit ergibt sich die folgende Form für die Zielfunktion

$$F = \tfrac{1}{4} \left[ |y(k)|^2 - 1 \right]^2 \qquad (8)$$

und somit ein Maß für die Abweichung des Betrages der komplexen Einhüllenden am Entzerrerausgang von dem konstanten Wert "1". Es wird vorausgesetzt, daß im Falle der Ausregelung der Amplitudenmodulation sich eine insgesamt entzerrte Übertragungsstrecke ergibt, daß also auch die Entzerrung der Phase der komplexen Einhüllenden erreicht ist. Das Entzerrerausgangssignal y(k) kann durch folgende Beziehung ausgedrückt werden:

$$y(k) = \underline{x}^T \underline{h} \qquad (9)$$

mit dem Zustandsvektor

$$\underline{x} = \left[ \, x(k), \, x(k-1), \ldots, x(k-(n-1)) \, \right]^T \qquad ; \; x(k) \in \mathbb{C} \qquad (10)$$

und dem Koeffizientenvektor

$$\underline{h} = \left[ \, h(0), \, h(1), \, \ldots, \, h(n-1) \, \right]^T \qquad ; \; h(k) \in \mathbb{C} \; . \qquad (11)$$

Hierbei bedeutet n die Entzerrerlänge. Mit der Gleichung (9) erhält man für die Zielfunktion den Ausdruck

$$F = \frac{1}{4} \left[ \, \underline{h}^* \underline{\bar{x}} \, \underline{x}^T \underline{h} - 1 \, \right]^2 \qquad (12)$$

wobei $\underline{\bar{x}}$ den konjugierten Spaltenvektor, $\underline{x}^T$ den Zeilenvektor und $\underline{x}^*$ den konjugierten Zeilenvektor bedeuten. Die Anpassung des Entzerrers 10 an die veränderlichen Eigenschaften des Übertragungskanals erfolgt durch Minimierung der quadratischen Abweichung F. Fig. 2 zeigt ein schematisches Blockschaltbild eines Entzerrers 10 gemäß Fig. 1. Es sind zwei Wege vorgesehen, einmal für den Realteil des gestörten FM-Signals $x_r(k)$ und einmal für den Imaginärteil $x_i(k)$. In dem oberen und unteren Weg enthält der Entzerrer 10 in Reihe geschaltete Verzögerungsglieder 14, 16, 18 bzw. 20, 22 und 24. Am Ausgang befindet sich jeweils ein Addierer 26 bzw. 28. Die genannten Verzögerungsglieder lassen sich in einfacher Weise nach Art von Schieberegisters realisieren, wobei jedes Glied eine Verzögerung um $x^e$ Takte darstellt. Hierbei bedeutet $x^e$ die am Empfänger eingestellte Laufzeit.

Ferner umfaßt der Entzerrer 10 Multiplizierer 30 - 40 bzw. 42 - 52, die in der dargestellten Weise mit den Addierern 26, 28 und den Verzögerungsgliedern 14 - 24 verbunden sind, und denen die Entzerrerkoeffizienten zugeführt sind. Die Erzeugung dieser Entzerrerkoeffizienten wird nachfolgend noch beschrieben.

5

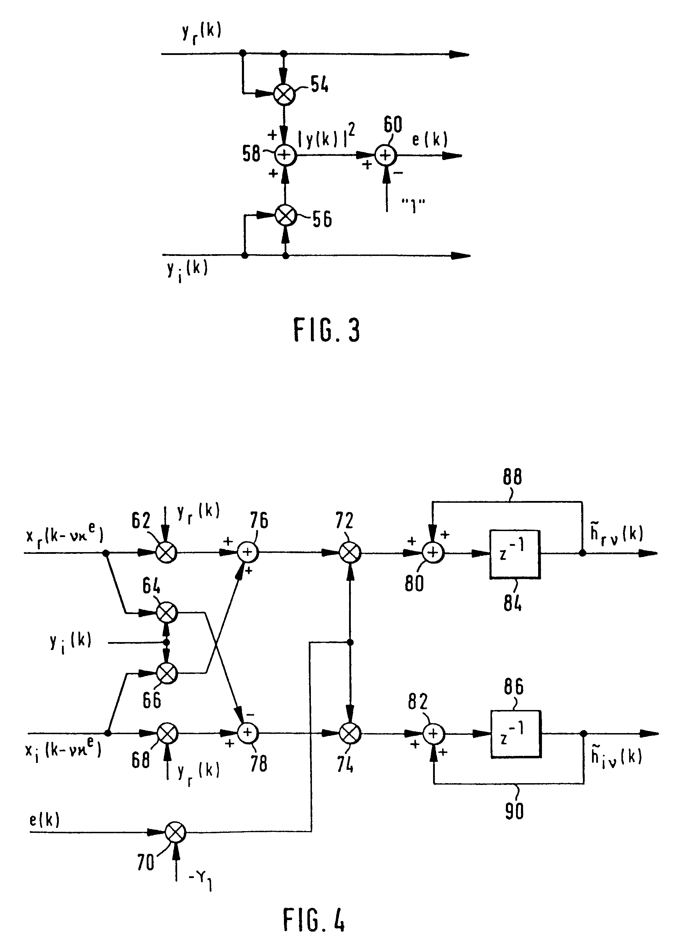

Da die Anpassung des Entzerrers 10 an die veränderlichen Eigenschaften des Übertragungskanals durch Minimierung der quadratischen Abweichung F erfolgt, muß der Fehler e(k) am Ausgang des Entzerrers 10 ermittelt werden, und hierzu ist in Fig. 3 ein Prinzipschaltbild gezeigt. Das gestörte FM-Signal ist wieder in Real- und Imaginärteil aufgeteilt. Beide Anteile gelangen jeweils zu einem Multiplizierer 54 und 56, die gemeinsam einen Addierer 58 speisen. Dessen Ausgang führt zu einem weiteren Addierer 60, an welchem zur Feststellung der Abweichungen der konstante Wert "1" liegt. Am Ausgang des Addierers 60 erhält man dann den Fehler e(k).

Die nachfolgend beschriebene adaptive Einstellung der um Vielfache von $x$ vorhandenen Entzerrerkoeffizienten erfolgt durch das Gradientenverfahren. Mit der Definition eines modifizierten Koeffizientenvektors

$$\tilde{\underline{h}} = \left[ h(o), h(\varkappa), ...., h((n-1)\varkappa) \right]^T \qquad (13)$$

kann dieses durch die Rechenvorschrift

$$\tilde{\underline{h}}(i+1) = \tilde{\underline{h}}(i) - \gamma_1 \cdot \text{grad}_{\tilde{\underline{h}}} F(i) \qquad ; \; \gamma_1 \in \mathbb{R} \qquad (14)$$

geschehen, wobei jetzt bei F in Gleichung (12) der Koeffizientenvektor $\underline{h}$ durch den Koeffizientenvektor gemäß der Gleichung (13) zu ersetzen ist. Unter mathematischer Bildung des Gradienten von F in Richtung des Koeffizientenvektors gemäß der Gleichung (13) läßt sich mathematisch die folgende Iterationsvorschrift für die Einstellung der Koeffizienten ableiten:

$$\tilde{\underline{h}}(i+1) = \tilde{\underline{h}}(i) - \gamma_1 \cdot e(k)\, y(k)\, \underline{\overline{x}} \qquad (15)$$

und in Fig. 4 ist ein Blockschaltbild einer schaltungstechnischen Realisierung für diese Iterationsvorschrift für die direkte Einstellung der Entzerrerkoeffizienten dargestellt. Dabei ist der Iterationszyklus i gleich den Abtastzeitpunkten k gewählt, d.h. während jeder Abtastung erfolgt ein Iterationszyklus. Die Abtastfrequenz $f_A$ beträgt vorzugsweise 500 kHz.

Wie man aus der Iterationsvorschrift erkennt, wird ein folgender Koeffizient aus dem jeweils vorhergehenden Koeffizient ermittelt, von welchem ein "Korrekturwert" (vgl. das zweite Glied auf der rechten Seite der Gleichung (15)) subtrahiert wird.

In Fig. 4 erfolgt die Einstellung der Koeffizienten wieder getrennt nach Real- und Imaginärteil. Das Blockschaltbild umfaßt für jeden komplexen Koeffizienten sieben Multiplizierer 62 - 74, vier Addierer 76 - 82 und für den Real- und Imaginärteil jeweils ein Verzögerungsglied 84, 86 mit einer Schleife 88 bzw. 90. Die Angabe $Z^{-1}$ bedeutet, daß eine Verzögerung um einen Takt erfolgt. In Folge der Rückführungen über die Schleifen 88 und 90 zu den Addierern 80 und 82 werden die Koeffizienten im Sinne einer Akkumulation ermittelt und stehen an den Ausgängen der Verzögerungsglieder 84 und 86 zur Verfügung, von wo aus sie zu den Multiplizierern in Fig. 2 geführt werden können.

Alternativ zu der beschriebenen direkten Einstellung der Entzerrerkoeffizienten ist es auch möglich, diese über die Mehrwegeparameter zu ermitteln, da die Koeffizienten gemäß der nachfolgenden mathematischen Betrachtungen vom komplexen Reflexionsfaktor abhängen.

Eine Lösung für den nichtrekursiven Entzerrer 10 erhält man durch Approximation der rekursiven Übertragungsfunktion gemäß der weiter oben angegebenen Gleichung (3). Die Z-Transformation von (3) liefert für den Spezialfall einer Einfachreflexion, wobei zunächst $x$ als ganzzahlig angenommen wird,

$$H_{EZ}(z) = \frac{1}{1 + r \cdot z^{-\varkappa}} \qquad (16)$$

mit

$$r = \rho \cdot e^{-j\psi} \qquad (17)$$

Die inverse Z-Transformierten von (16) stellt die zeitlich unbegrenzte Impulsantwort eines rekursiven Entzerrers dar. Hieraus gewinnt man , im einfachsten Fall durch eine Rechteck-Fensterung, eine approximierte, nichtrekursive Lösung. Die nach n Abtastwerten abgebrochene rekursive Impulsantwort liefert

$$|r| < 1 \quad : \quad h(k) = \begin{cases} (-r)^{k/\varkappa} & \text{für} \quad k/\varkappa = 0,1,\ldots,n-1 \\ \\ 0 & \text{sonst} \end{cases} \qquad (18)$$

$$|r| > 1 \quad : \quad h(k) = \begin{cases} (-r)^{k/\varkappa - n} & \text{für } k/\varkappa = 0,1\ldots,n-1 \\ \\ 0 & \text{sonst} \end{cases} \qquad (19)$$

und zeigt die Abhängigkeit der Entzerrerkoeffizienten von dem komplexen Reflexionsfaktor. Die resultierende nichtrekursive Impulsantwort (18) und (19) besteht nur für ganzzahlige Vielfache der Verzögerung $x$ aus Abtastwerten, die ungleich Null sind. Diese können bei Kenntnis des komplexen Reflexionsfaktors r eindeutig bestimmt werden.

Durch Anwendung dieses a-priori Wissens ist es möglich, die adaptive Einstellung der Koeffizienten auf die Identifizierung des Parameters r zurückzuführen. Die aktuellen Koeffizienten lassen sich dann in einfacher Weise mittels einer Tabelle berechnen. Für die folgenden Betrachtungen wird vorausgesetzt, daß die Verzögerung am Entzerrer 10 bekannt ist (die Einstellung der Verzögerung wird weiter unten noch näher erläutert).

Bei einer korrekten Einstellung des Entzerrers 10 stimmt der am Empfänger ermittelte Parameter $r^e$ mit dem tatsächlich vorhandenen Übertragungsparameter $r^{ü}$ überein (durch den nach oben geschriebenen Buchstaben e wird angedeutet, daß der Parameter am Empfänger ermittelt wurde). Die Identifizierung des Parameters $r^{ü}$ erfolgt durch Minimierung der quadratischen Abweichung F nach dem Gradientenverfahren über den Betrag und die Phase. Wenn man folgende Vektoren

$$\underline{p} = [\rho^e, \psi^e]^T \qquad (20)$$

$$\text{grad}_{\underline{p}} F(i) = \left[ \frac{\partial F(i)}{\partial \rho^e(i)} , \frac{\partial F(i)}{\partial \psi^e(i)} \right]^T \qquad (21)$$

und die Matrix

$$\underline{G} = \begin{bmatrix} \gamma_2 & 0 \\ 0 & \gamma_3 \end{bmatrix} = \text{diag}(\gamma_\nu) \qquad ; \gamma_\nu \in \mathbb{R}, \qquad (22)$$

definiert, so kann dieses durch die folgende Rechenvorschrift erfolgen:

$$\underline{p}(i+1) = \underline{p}(i) - \underline{G} \cdot \text{grad}_{\underline{p}} F(i) . \qquad (23)$$

Die Gleichung (20) definiert einen Vektor, der den Betrag und die Phase des Parameters r angibt. Bei geeigneter Wahl der positiven Schrittweiten $\gamma_2$ und $\gamma_3$ strebt der Vektor p gegen einen stationären Endwert, der durch $\rho^{\ddot{u}}$ und $\psi^{\ddot{u}}$ gegeben ist. Mit der weiter oben definierten Gleichung (12) ergibt sich für die partielle Ableitung der Zielfunktion nach $\rho^e$

$$\frac{\partial\ F(i)}{\partial\ \rho^c(i)} = \frac{1}{2}\ e(k) \left[ \overline{y}(k)\cdot\frac{\partial\ y(k)}{\partial\rho^c(i)} + y(k)\cdot\frac{\partial\ \overline{y}(k)}{\partial\rho^c(i)} \right] \tag{24}$$

$$= e(k)\cdot Re\left\{ y(k)\cdot \underline{x}^*\ \underline{h}\ \rho \right\} \quad .$$

In analoger Weise erhält man die folgende Beziehung (25) für die partielle Ableitung der Zielfunktion nach $\psi^e$

$$\frac{\partial\ F(i)}{\partial\ \Psi^c(i)} = e(k)\cdot Re\left\{ y(k)\cdot \underline{x}^*\ \underline{h}_\psi \right\} \tag{25}$$

Hierbei sind die partiellen Ableitungen der Entzerrerkoeffizienten nach $\rho^e$ und $\psi^e$ in den Vektoren

$$\underline{h}_\rho = \left[ \frac{\partial h(o)}{\partial\rho^c(i)} \ , \ \frac{\partial\ h(\varkappa)}{\partial\rho^c(i)} \ , \ \ldots\ , \ \frac{\partial\ h((n-1)\varkappa)}{\partial\rho^c(i)} \right]^T \tag{26}$$

$$\underline{h}_\psi = \left[ \frac{\partial\ h(o)}{\partial\Psi^c(i)} \ , \ \frac{\partial h(\varkappa)}{\partial\Psi^c(i)} \ , \ \ldots\ , \ \frac{\partial\ h((n-1)\varkappa)}{\partial\Psi^c(i)} \right]^T \ ; \ h(\nu), h_\psi(\nu)\epsilon\ \mathbb{C} \tag{27}$$

zusammengefaßt. Für die Komponenten der Vektoren (26) und (27) erhält man einen expliziten Ausdruck als Funktion des Vektors $\underline{\tilde{h}}$. Zur Vereinfachung der resultierenden Iterationsvorschrift werden der Vektor

$$\underline{h}_{\rho,\psi} = [\underline{h}_\rho, \underline{h}_\psi]^T \tag{28}$$

und die Matrix

$$\underline{X} = \begin{bmatrix} \underline{x}^* & o \\ o & \underline{x}^* \end{bmatrix} \tag{29}$$

definiert. Hiermit erhält man folgende Iterationsvorschrift:

$$\underline{p}(i+1) = \underline{p}(i) - \underline{G}\cdot e(k)\cdot Re\left\{ y(k)\cdot \underline{X}\ h_{\rho,\psi} \right\} \tag{30}$$

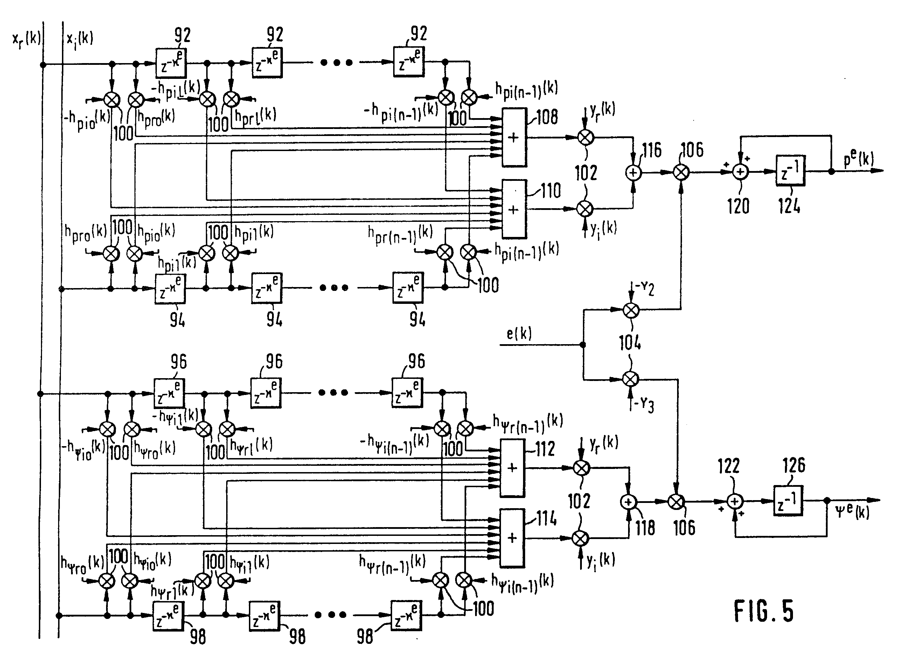

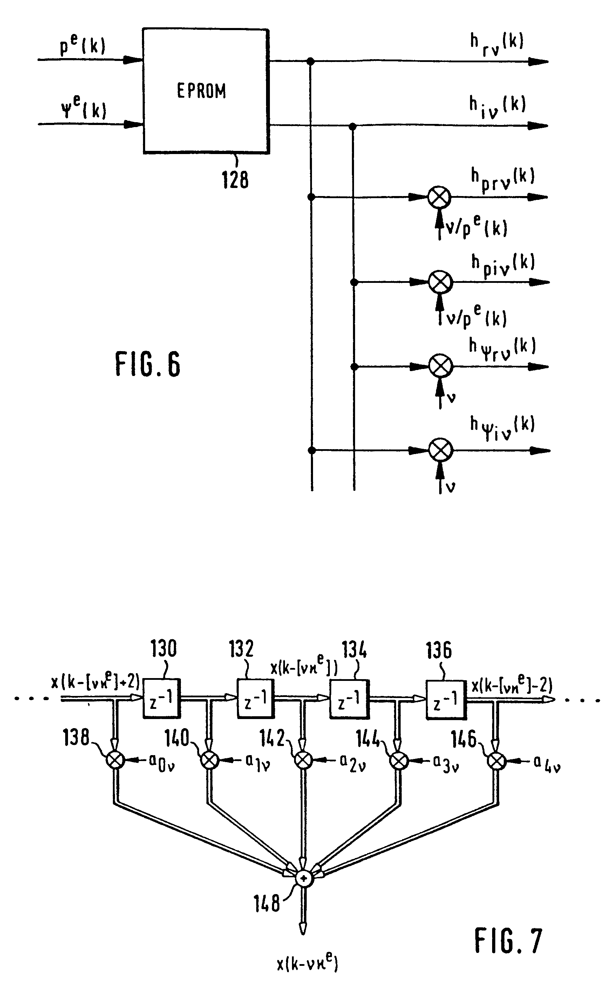

und in Fig. 5 und 6 sind hierzu schaltungstechnische Realisierungen gezeigt. Aus den identifizierten Parametern $\rho^e$ und $\psi^e$ können dann - über den komplexen Reflexionswert $r^e$ - die Koeffizienten nach den Gleichungen (18) und (19) berechnet werden. In der obigen Iterationsvorschrift (30) wird durch die Indizes $\rho$

EP 0 231 487 B1

und $\psi$ die Ableitung nach $\rho$ und $\psi$ angegeben.

Die Verarbeitung in dem Blockschaltbild gemäß Fig. 5 erfolgt wieder getrennt nach Real- und Imaginäteil. Die Struktur umfaßt in Reihe geschaltete Verzögerungsglieder 92 - 98, die jeweils eine Verzögerung um $x^e$-Takte bedeuten, mit zugeordneten Multiplizierern 100, die zu jeweils einer Addierstufe 108 - 114 führen. An die Ausgänge der Addierstufen 108 - 114 schließen sich jeweils Multiplizierer 102 an, denen ein Addierer 116 bzw. 118 nachgeschaltet ist.

Ferner umfaßt die Schaltung zwei Multiplizierer 104 die zu zwei mit den Addierern 116 und 118 verbundenen Multiplizierern 106 führen. Daran schließen sich jeweils ein Addierer 120 bzw. 122 und ein Verzögerungsglied 124 bzw. 126 an. Hier erfolgt wieder eine Akkumulation, wobei die Verzögerunsglieder 124, 126 eine Verzögerung um einen Takt bewirken.

Die Ausgangssignale der Zeitglieder 124 und 126 gelangen gemäß Fig. 6 zu einer Tafel 128, um die Koeffizienten aus den ermittelten Werten zu bestimmen. Dabei besteht der Vorteil, daß alle z.B. 32 Koeffizienten gleichzeitig bestimmt werden können, wenn der Reflexionsfaktor erst einmal ermittelt ist.

Die vorstehende Beschreibung und die entsprechenden Schaltungen erhalten erst dann eine praktische Bedeutung, wenn auch die Verzögerung $x$ identifiziert wird. Wie bei den anderen Übertragungsparametern kann dies durch Minimierung der quadratischen Abweichung erfolgen.

Für eine korrekte Kompensation der reflektierten Welle ist die Einstellung einer Verzögerung um nicht ganzzahlige Vielfache eines Abtastintervalls T erforderlich, und die Berechnung der Zwischenwerte (zwischen ganzzahligen Vielfachen) der Verzögerung wird durch an sich bekannte Interpolationsverfahren vorgenommen und führt zu einer modifizierten Zustandsspeicher-Struktur.

Zur Identifizierung der Verzögerung $x$ dient die folgende Rechenvorschrift

$$x^c(i+1) = x^c(i) - \gamma_4 \cdot \frac{\partial F(i)}{\partial x^c(i)} \quad ; \quad \gamma_4 \in |R \quad . \tag{32}$$

Die Ableitung der Zielfunktion nach $x$ kann gebildet werden, indem man die Zustandsvariable des Entzerrers 10 als Funktion der Verzögerung $x$ ausdrückt. Diese Bedingung läßt sich erfüllen, wenn man den um nicht ganzzahlige Vielfache des Abtastintervalls T verzögerten Zustandswert durch ein Polynom approximiert. Dabei sind die Polynomkoeffizienten - auch Interpolationskoeffizienten genannt - von der Verzögerung abhängig.

Die Berechnung der Zustandswerte mittels einer Interpolation m-ter Ordnung erfolgt durch den Ansatz nach Lagrange:

$$x(k - \nu x^c) \approx \sum_{\mu=m/2}^{m/2} \alpha_{\mu\nu} \cdot x(k - [\nu x^c] - \mu) \quad ; \quad \alpha_{\mu\nu} \in |R. \tag{33}$$

Die Interpolationskoeffizienten $\alpha_{\mu\nu}$ ergeben sich aus der folgenden Gleichung (34)

$$\alpha_{\mu\nu} = \prod_{\substack{j=-m/2 \\ j \neq \mu}}^{m/2} \left( \frac{\nu x^c - [\nu x^c] - j}{\mu - j} \right) \tag{34}$$

wobei m den Interpolationsgrad angibt und $[\nu x^e]$ die größte ganze Zahl, die kleiner oder gleich $\nu x^e$ ist. Für den Fall m ungerade ist die Summationsgrenze in den Gleichungen (33) und (34) durch (m-1)/2 zu ersetzen. Die Realisierung der Gleichung (33) führt zu einer modifizierten Struktur des nichtrekursiven Entzerrers und erfolgt gemäß Fig. 7.

Dieses Blockschaltbild zeigt die Realisierung des $\nu$-ten Zustandswertes durch eine Interpolation 4-ter Ordnung und umfaßt vier Verzögerungsglieder 130 - 136, die jeweils eine Verzögerung um einen Takt

9

bewirken, sowie fünf Multiplizierer 138 - 146, die gemeinsam zu einem Addierer 148 führen.

Das Blockschaltbild nach Fig. 7 weist besonders günstige Eigenschaften bezüglich des Einschwingverhaltens und möglicher Interpolationsfehler auf. Die um ganzzahlige Vielfache des Abtastintervalls T verzögerten Zustandswerte sind von den Interpolationskoeffizienten unabhängig, so daß diese in jedem Iterationszyklus neu berechnet werden können. Andererseits ist der Interpolationsfehler für jeden berechneten Zwischenwert der Verzögerung gleich groß.

Es wird nun folgender Vektor definiert:

$$\underline{x}_{\varkappa} = \left[ \frac{\partial x(0)}{\partial \varkappa^{e}(i)} \; , \; \frac{\partial x(\varkappa^{e})}{\partial \varkappa^{e}(i)} \; ,\cdots\cdots , \; \frac{\partial x(k-(n-1)\varkappa^{e})}{\partial \varkappa^{e}(i)} \right]^{T} \cdot \qquad (35)$$

indem die partiellen Ableitungen der Zustandsvariablen nach $x^{e}$ zusammengefaßt sind, und man erhält dann für die Ableitung der Zielfunktion F nach $x^{e}$

$$\frac{\partial F(i)}{\partial \varkappa^{e}(i)} = \frac{1}{2} e(k) \left[ \bar{y}(k) \cdot \frac{\partial y(k)}{\partial \varkappa^{e}(i)} + y(k) \cdot \frac{\partial \bar{y}(k)}{\partial \varkappa^{e}(i)} \right] \qquad (36)$$

$$= e(k) \cdot Re \left\{ y(k) \underline{\tilde{h}}^{*} \underline{\tilde{x}}_{\varkappa} \right\} \qquad (37)$$

Die Elemente des Vektors $x_{\varkappa}$ lassen sich explizit aus der Gleichung (33) berechnen. Mit der obigen Beziehung (37) ergibt sich die nachfolgende Iterationsvorschrift zur Identifizierung der Verzögerung $x^{e}$

$$\varkappa^{e}(i+1) = \varkappa^{e}(i) - \gamma_{4} \cdot e(k) \cdot Re \left\{ y(k) \underline{\tilde{h}}^{*} \underline{\tilde{x}}_{\varkappa} \right\} \qquad (38)$$

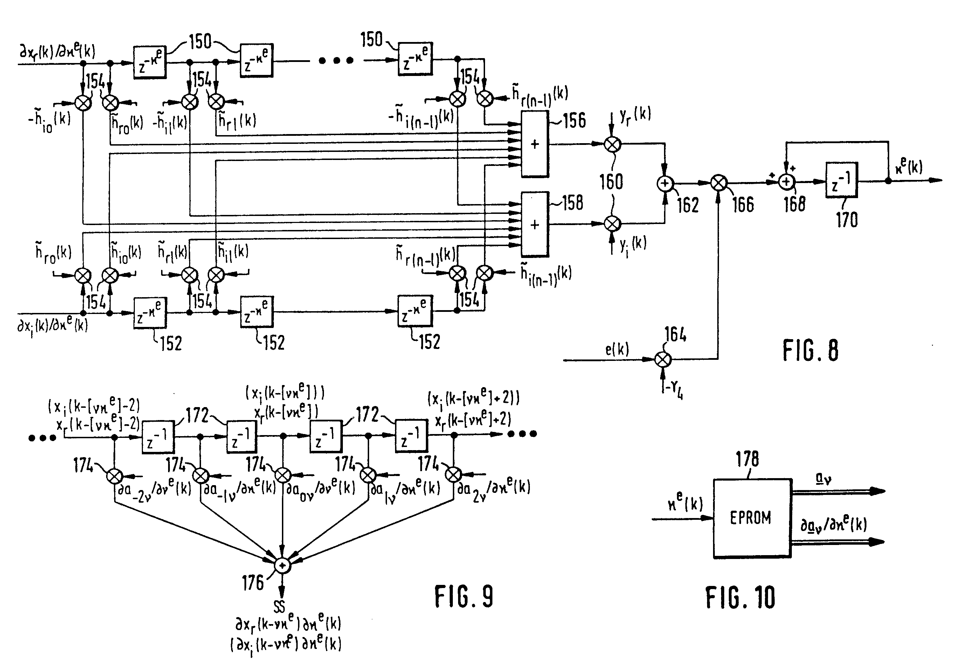

die durch das Blockschaltbild gemäß Fig. 8 realisierbar ist.

Die Identifizierung der Verzögerung erfolgt mittels Verzögerungsglieder 150 und 152, die jeweils eine Verzögerung um $x^{e}$-Takte bewirken und der Multiplizierer 154, die zu zwei Addierstufen 156 und 158 führen. An jede Addierstufe 156, 158 schließt sich ein weiterer Multiplizierer 160 an, die gemeinsam einen Addierer 162 speisen.

Weiterhin umfaßt das Blockschaltbild gemäß Fig. 8 einen Multiplizierer 164 für den Fehler e(k) sowie einen Multiplizierer 166, an den sich ein Addierer 168 und ein Verzögerungsglied 170 mit einer Schleife für eine Akkumulation anschließen. Am Ausgang des Verzögerunggliedes 170 erhält man die Verzögerung am Empfänger.

Die für die Identifizierung der Verzögerung gemäß Fig. 8 benötigten partiellen Ableitungen der Zustandsvariablen nach x werden gemäß dem Blockschaltbild in Fig. 9 gebildet. Der Schaltungsausschnitt umfaßt vier Verzögerungsglieder 172, die jeweils eine Verzögerung um einen Takt bewirken, sowie fünf Multiplizierer 174, die einen gemeinsamen Addierer 176 speisen.

Schließlich zeigt Fig. 10 noch die Bildung der Interpolationskoeffizienten und deren Ableitung nach x mittels einer Tabelle 178.

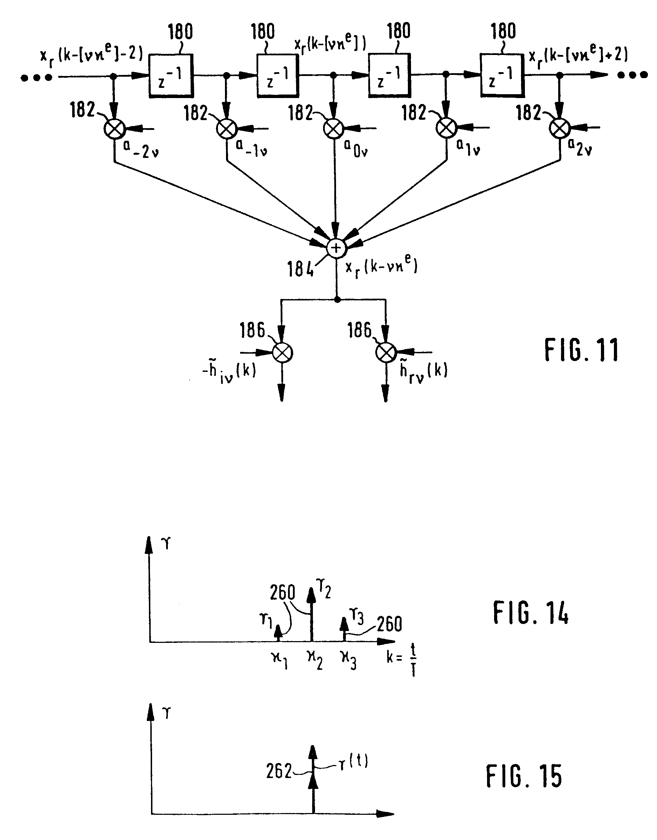

Das Blockschaltbild in Fig. 11 gibt einen Ausschnitt aus der Struktur des nichtrekursiven Entzerrers gemäß Fig. 2 mit einer Einstellung der Verzögerung mittels einer Interpolation 4-ter Ordnung wieder. Es sind 4 Verzögerungsglieder 180 sowie fünf Multiplizierer 182 vorgesehen. Letztere führen zu einem gemeinsamen Addierer 184, auf den zwei Multiplizierer 186 folgen.

Bei dem weiter oben beschriebenen Ausführungsbeispiel für die Einstellung der Entzerrerkoeffizienten unter Zuhilfenahme des Reflexionsfaktors r (Gleichung (30) und Fig. 5, 6) wurde von einer Exponentialform

EP 0 231 487 B1

für r ausgegangen.

Daneben ist aber auch die Einstellung der Entzerrerkoeffizienten möglich, wenn man den Reflexionsfaktor über den Real- und Imaginärteil identifiziert. Der Reflexionsfaktor hat also die Form

$$r = r_r + jr_i \qquad (39)$$

mit

$$r_r = \rho \cos \psi \qquad (40)$$

$$r_i = -\rho \sin \psi. \qquad (41)$$

Diese Darstellungsform kann nun zur Aufstellung einer rekursiven Rechenvorschrift zur Identifizierung des Reflexionsfaktors r verwendet werden, um daraus dann die Koeffizienten zu ermitteln. Hierzu werden die beiden Komponenten durch Minimierung der Zielfunktion F nach dem Gradientenverfahren durch folgende Rechenvorschrift ermittelt:

$$r_r^e(k+1) = r_r^e(k) - \gamma \cdot \frac{\partial F(k)}{\partial r_r^e(k)} \qquad (42)$$

$$r_i^e(k+1) = r_i^e(k) - \gamma \cdot \frac{\partial F(k)}{\partial r_i^e(k)} ; \qquad r_r^e(k), r_i^e(k), \gamma \in R \qquad (43)$$

Die partielle Ableitung der Zielfunktion nach der Komponente $r_r^e$ liefert

$$\frac{\partial F(k)}{\partial r_r^e(k)} = \frac{1}{2} e(k) \left[ y(k) \cdot \frac{\partial \overline{y}(k)}{\partial r_r^e(k)} + \overline{y}(k) \cdot \frac{\partial y(k)}{\partial r_r^e(k)} \right] \qquad (44)$$

$$= \frac{1}{2} e(k) \left[ y(k) \cdot \frac{\partial \overline{y}(k)}{\partial r_r^e(k)} + \overline{y(k) \cdot \frac{\partial \overline{y}(k)}{\partial r_r^e(k)}} \right] \qquad (45)$$

$$= e(k) \cdot \mathrm{Re} \left\{ y(k) \cdot \underline{x}^* \frac{\overline{\partial \tilde{h}}}{\partial r_r^e(k)} \right\} \qquad (46)$$

In analoger Weise erhält man die Beziehung (47) für die partielle Ableitung der Zielfunktion nach der Komponente $r_i^e$

$$\frac{\partial F(k)}{\partial r_i^e(k)} = e(k) \cdot \mathrm{Re} \left\{ y(k) \cdot \underline{x}^* \frac{\overline{\partial \tilde{h}}}{\partial r_i^e(k)} \right\} \qquad (47)$$

Die Iterationsvorschrift gemäß den Gleichungen (42) und (43) kann zur Vereinfachung durch folgende komplexe Form ausgedrückt werden:

11

$$r^e(k+1) = r^e(k) - \gamma\left[ \frac{\partial F(k)}{\partial r_r^e(k)} + j \frac{\partial F(k)}{\partial r_i^e(k)} \right]$$

$$\tag{48}$$

$$= r^e(k) - \gamma \cdot \frac{\partial F(k)}{\partial r^e(k)}$$

Mit

$$\frac{\partial \overline{\tilde{h}(\nu)}}{\partial r_r^e(k)} = -\nu(-r^e)^{\nu-1} \hat{=} \frac{\partial \overline{\tilde{h}(\nu)}}{\partial r^e(k)} \tag{49}$$

$$\frac{\partial \overline{\tilde{h}(\nu)}}{\partial r_i^e(k)} = -j\,\nu(-r^e)^{\nu-1} \hat{=} -j\frac{\partial \overline{\tilde{h}(\nu)}}{\partial r^e(k)} \tag{50}$$

erhält man den nachfolgenden Ausdruck für die komplexe Ableitung der Zielfunktion nach r

$$\frac{\partial F(k)}{\partial r^e(k)} = e(k)\left[ \mathrm{Re}\{ y(k)\cdot \underline{x}^{*}\underline{\tilde{h}}_r \} + j\,\mathrm{Re}\{ -j\,y(k)\cdot \underline{x}^{*}\underline{\tilde{h}}_r \} \right] \tag{51}$$

$$= e(k)\cdot y(k)\cdot \underline{x}^{*}\underline{\tilde{h}}_r \ . \tag{52}$$

Hierbei sind die partiellen Ableitungen der Entzerrerkoeffizienten nach r im Vektor

$$\underline{\tilde{h}}_r = \left[ \frac{\overline{\partial h(o)}}{\partial r^e(k)}, \frac{\overline{\partial h(\nu)}}{\partial r^e(k)}, \ldots\ldots, \frac{\overline{\partial h((n-1)\varkappa)}}{\partial r^e(k)} \right]^T \tag{53}$$

zusammengefaßt. Durch Einsetzen der Gleichung (52) in (48) ergibt sich die nachfolgende Iterationsvorschrift für den Reflexionsfaktor:

$$r^e(k+1) = r^e(k) - \gamma\, e(k)\cdot y(k)\cdot \underline{x}^{*}\underline{\tilde{h}}_r . \tag{54}$$

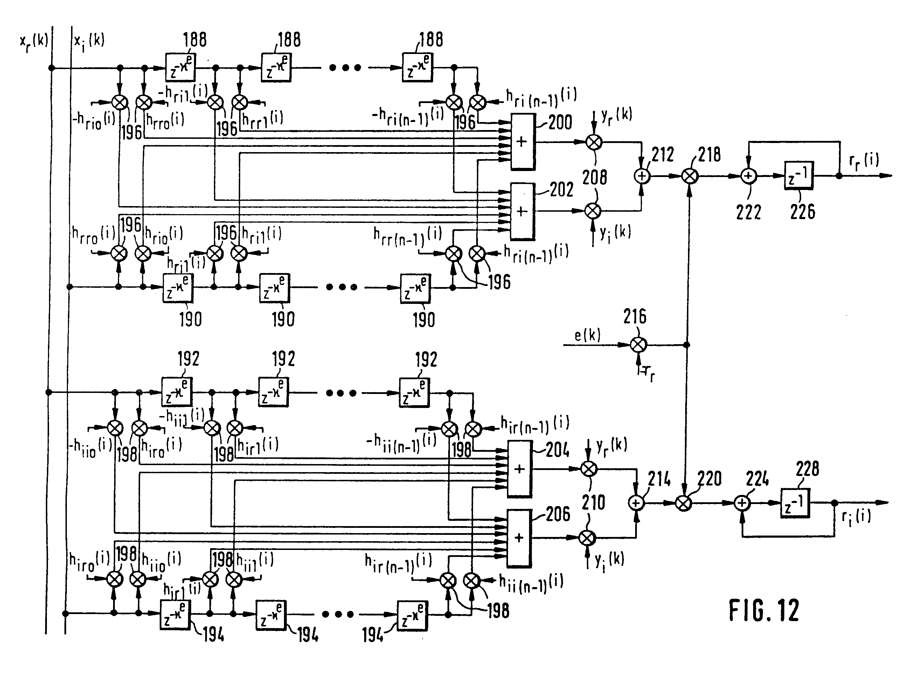

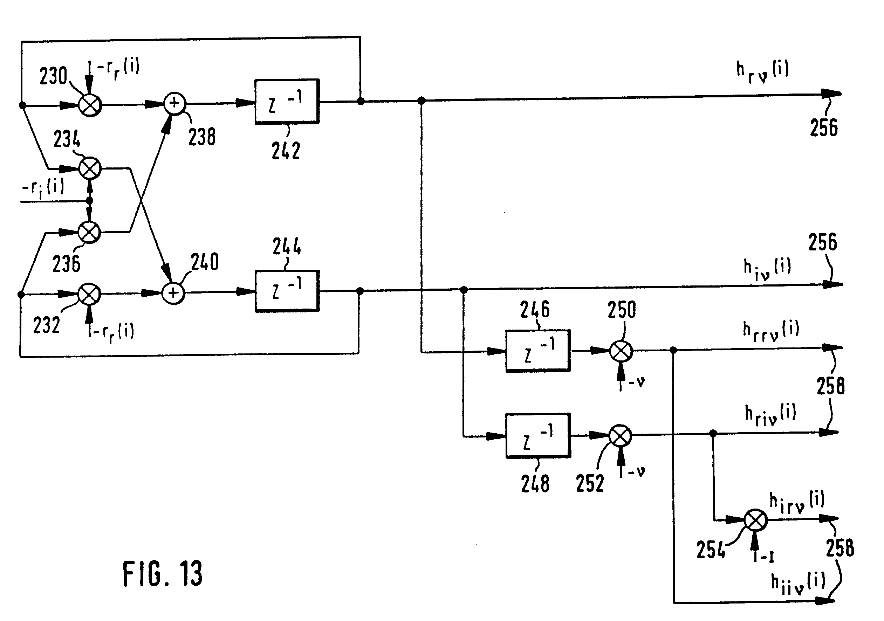

Ein entsprechendes Blockschaltbild zur Identifizierung der Komponenten des komplexen Reflexionsfaktors ist in Fig. 12 dargestellt, und Fig. 13 zeigt ein Blockschaltbild zur Bildung der Entzerrerkoeffizienten und deren partiellen Ableitungen über den komplexen Reflexionsfaktor.

Das Blockschaltbild gemäß Fig. 12 umfaßt jeweils in Reihe geschaltete Verzögerungsglieder 188, 190, 192 und 194, die jeweils eine Verzögerung um $x^e$-Takte bew-irken, mit zugeordneten Multiplizierern 196 und 198. Die Multiplizierer führen zu insgesamt vier Addierstufen 200, 202, 204 und 206, auf de- auf denen jeweils die Multiplizierer 208 und 120 folgen, die zu dem gemeinsamen Addierer 212 bzw. 214 führen.

Ferner ist noch ein Multiplizierer 216 vorgesehen,der zu den beiden Multiplizierern 218 und 220 führt. An den Multiplizierer 218 schließt sich ein Addierer 222 sowie ein Verzögerungsglied 226 an, und auf den Multiplizierer 220 folgen der Addierer 224 und das Verzögerungsglied 228. Über eine Rückführung vom Ausgang der Verzögerungsglieder 226, 228 zu den Addierern 222 bzw. 224 erfolgt wieder eine Akkumulation zur Bestimmung der jeweiligen Werte aus dem vorhergehenden Wert.

Das Blockschaltbild gemäß Fig. 13 verdeutlicht, wie aus dem Real- und Imaginärteil des zuvor ermittelten Reflexionsfaktors die gewünschten Entzerrerkoeffizienten h bestimmt werden können. Die Struktur umfaßt jeweils einen Multiplizierer 230 und 232 für den Realteil und jeweils einen Multiplizierer 234 und 236 für den Imaginärteil. Der obere Addierer 238 ist mit den Multiplizierern 230 und 236 und der untere Addierer 242 ist mit den Multiplizierern 234 und 232 verbunden.

An die beiden Addierer 238 und 240 schließt sich jeweils ein Verzögerungsglied 242 bzw. 244 mit einer Rückschleife an. In dem soweit beschriebenen Schaltungsteil werden die Koeffizienten h($\nu$ + 1) = (-r) h($\nu$) ermittelt.

An das Verzögerungsglied 242 schließt sich ein weiteres Verzögerungsglied 246 an, und auf das Verzögerungsglied 244 folgt ein weiteres Verzögerungsglied 248. Alle Verzögerungsglieder 242 - 248 bewirken jeweils eine Verzögerung um einen Takt.

An die beiden Verzögerungsglieder 246 und 248 schließt sich jeweils ein Multiplizierer 250 bzw. 252 an, und letzterer ist mit einem weiteren Multiplizierer 254 verbunden.

An den oberen beiden Ausgängen 256 stehen die gewünschten Entzerrerkoeffizienten zur Verfügung, während an den unteren vier Ausgängen 258 die partiellen Ableitungen der Entzerrerkoeffizienten nach $r_r^e$ und $r_i^e$ entnommen werden können. Hierbei sind die partiellen Ableitungen durch folgende Ausdrücke definiert:

$$h_{rr\nu}(i) \triangleq \frac{\partial h_{r\nu}(i)}{\partial r_r(i)} \quad , \quad h_{ri\nu}(i) \triangleq \frac{\partial h_{r\nu}(i)}{\partial r_i(i)}$$

$$h_{ir\nu}(i) \triangleq \frac{\partial h_{i\nu}(i)}{\partial r_r(i)} \quad , \quad h_{ii\nu}(i) \triangleq \frac{\partial h_{i\nu}(i)}{\partial r_i(i)}$$

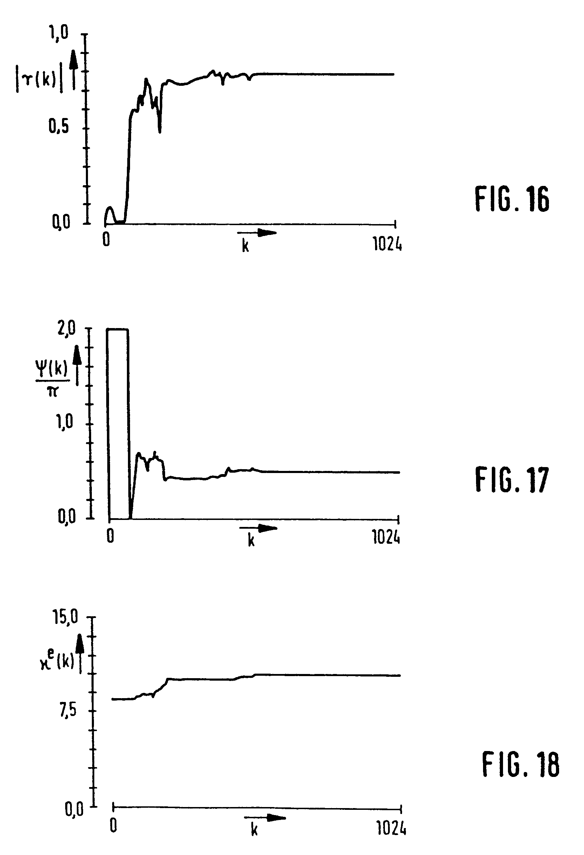

Zur weiteren Erläuterung der Arbeitsweise des erfindungsgemäßen Entzerrers und der dadurch erzielbaren Vorteile wird nachfolgend auf die Diagramme gemäß Fig. 16 - 20 Bezug genommen, wo der Verlauf der einzelnen Größen während der Einstellphase wiedergegeben ist, und zwar für den Fall einer Zweiwegeübertragung mit $r^{\ddot{u}} = 0.8 \cdot e^{-j90°}$ und $x^{\ddot{u}} = 10.5$. Die adaptive Einstellung erfolgte mit konstanter Schrittweite, die so gewählt wurde, daß ein schnelles Einlaufverhalten erfolgt und die Stabilität des Systems gewährleistet ist. Es hat sich gezeigt, daß die identifizierten Mehrwegeparameter nach 312 Iterationen am Entzerrer korrekt eingestellt sind. Bereits nach einer Periode weist das demodulierte NF-Ausgangssignal keine Verzerrungen mehr infolge von Mehrwegeempfang auf.

Fig. 16 und 17 geben den Betrag bzw. die Phase des Reflexionsfaktors wieder, und Fig. 18 zeigt den Verlauf der Verzögerung am Empfänger.

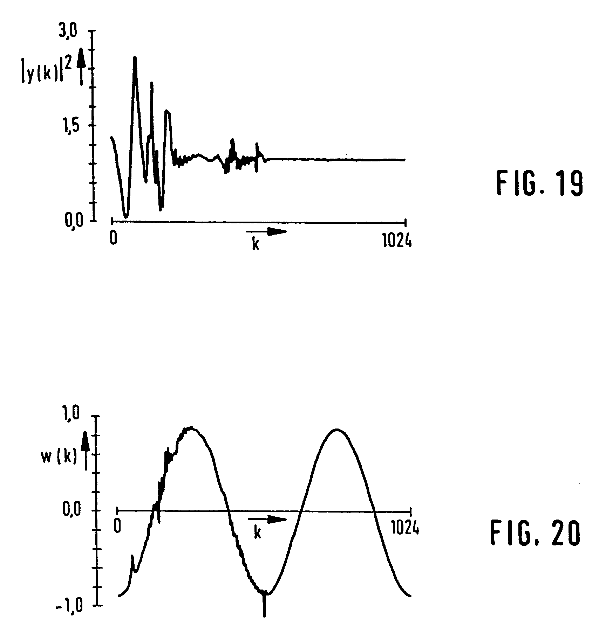

Besonders anschaulich ist Fig. 19, welche die quadratische Abweichung bzw. das Quadrat der Einhüllenden am Ausgang des Entzerrers 10 in Fig. 2 wiedergibt. Nach anfänglichen Schwankungen (Amplitudenmodulation infolge der Verzerrungen) bleibt der Betrag der Einhüllenden in gewünschter Weise konstant, wobei zuvor aufgrund der Abweichungen nach Maßgabe der oben beschriebenen Zielfunktion und der Iterationsvorschriften die Entzerrerparameter eingestellt sind.

Fig. 20 gibt ein demoduliertes NF-Ausgangssignal am Ausgang des Demodulators 12 wieder, und es ist zu erkennen, daß die anfänglichen Verzerrungen schon nach etwa einer Periode kompensiert sind, wenn die Amplitude der Einhüllenden am Ausgang des Empfängers konstant bleibt. Die sehr schnelle Einstellzeit liegt beispielsweise bei 1 ms, d.h. die kurzzeitig während der Einstellphase auftretenden Verzerrungen sind ackustisch nicht wahrnehmbar.

Während die voranstehenden Erläuterungen einen Zweiwegeempfang betreffen, wird nachfolgend von einem Mehrwegeempfang ausgegangen.

Die Darstellung in Fig. 14 zeigt beispielhaft insgesamt drei Reflexionsfaktoren bei einer Mehrwegeübertragung. Trotz der Mehrwegeübertragung geht die Erfindung aber bewußt von einer Entzerrerstruktur für einen Zweiwegeempfang aus. Die Erfindung macht sich die Erkenntnis zugrunde, daß das in Fig. 14 gezeigte sogenannte "Cluster" mit mehreren Reflexionsfaktoren durch die Darstellung in Fig. 15 mit einem Reflexionsfaktor "ersetzt" werden kann. Da sich der Mehrwegeempfang auf diese Weise durch einen einzigen Refelxionsfaktor beschreiben läßt, kann mit Vorteil die modifizierte Entzerrerstruktur für einen Zweiwegeempfang (Einfachrefelexion) angewendet werden.

Zur Verdeutlichung sei nachfolgend ein Zahlenbeispiel unter der Annahme der drei Reflexionsfaktoren gemäß Fig. 14 wiedergegeben:

$r_1 = 0,1$ $\tau_1 = \pi/2$ $x_1 = 9 = 5,4$ km (Umweg)

$r_2 = 0,5$ $\tau_2 = \pi/2$ $x_2 = 10 = 6,0$ km (Umweg)

$r_3 = 0,2$ $\tau_3 = \pi/2$ $x_3 = 11 = 6,6$ km (Umweg)

Die Anzahl der Koeffizienten beträgt hier 32, und die Anzahl der Iterationen ist gleich 4096. Ohne Entzerrung wurde ein Klirrfaktor K von 10,471% gemessen, und mit der Entzerrung nach der Erfindung beträgt der Klirrfaktor nur noch 0,9101%.

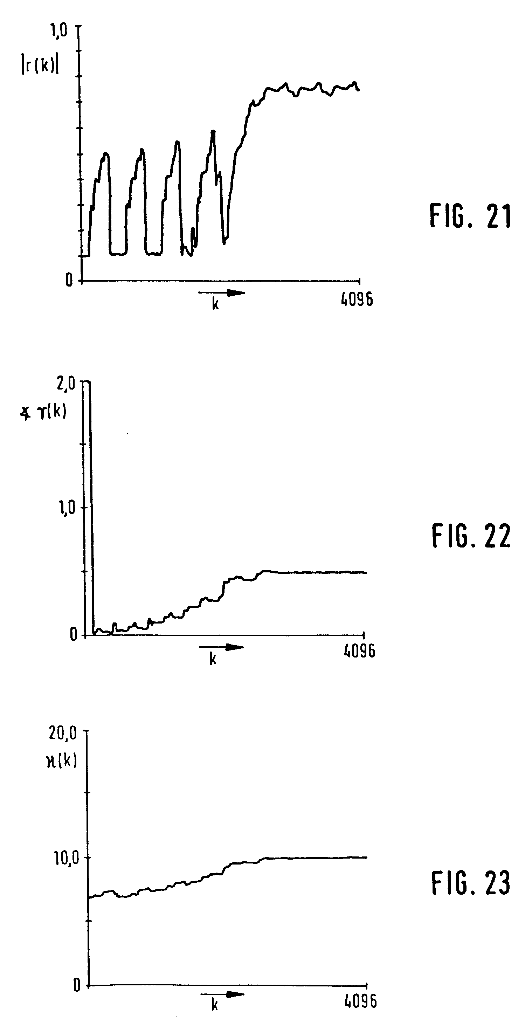

Für den oben geschilderten Fall eines Mehrwegeempfanges wurden ebenfalls Messungen durchgeführt, die in den Diagrammen gemäß Fig. 21 - 25 wiedergegeben sind, und welche bestätigen, daß mit der modifizierten Entzerrerstruktur auch hier eine hinreichende Kompensation der auftretenden Verzerrungen erzielt werden kann.

Fig. 21 und 22 geben den Betrag bzw. die Phase des Reflexionsfaktors r wieder, und Fig. 23 zeigt den Verlauf der Verzögerung. Erkennbar ist die Einstellphase hier zwar etwas größer, allerdings immer noch unterhalb einer akustisch überhaupt wahrnehmbaren Schwelle.

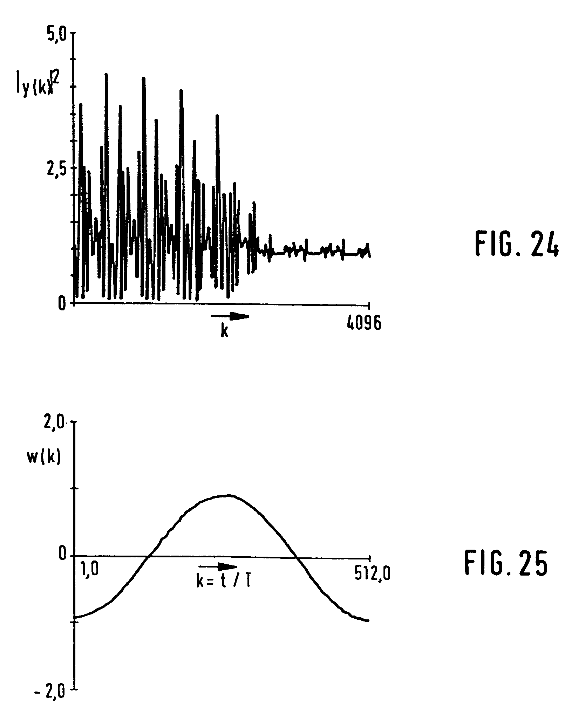

Besonders anschaulich ist Fig. 24, welche die quadratische Abweichung bzw. das Quadrat der Einhüllenden am Ausgang des Entzerrers beim Mehrwegeempfang wiedergibt. Wie man deutlich erkennen kann, bleibt der Betrag der Einhüllenden nach anfänglichen Schwankungen (Amplitudenmodulation infolge der Verzerrungen) in etwa konstant.

Am deutlichsten läßt sich der mit der Erfindung erzielte Erfolg anhand von Fig. 25 darstellen, welche ein demoduliertes NF-Ausgangssignal am Ausgang des Demodulators 12 wiedergibt. Die zeichnerisch kaum noch darzustellenden Restverzerrungen sind so gering, daß sie der Benutzer des FM-Empfängers nicht mehr hört.

Selbstverständlich ist die Erfindung nicht auf die beschriebenen Ausführungsbeispiele beschränkt. Vielmehr sind im Rahmen der Erfindung mancherlei Abwandlungen möglich, um den grundlegenden Gedanken zu realisieren, der darin besteht, trotz des Mehrwegeempfanges gezielt eine Entzerrerstruktur für einen Zweiwegeempfang zu verwenden. Bei der Einstellung der Koeffizienten über die Mehrwegeparameter ist die resultierende Impulsantwort des Entzerrers bekannt, und dieses á-priori Wissen führt in der Praxis zu einer deutlichen Reduktion der Einstellzeit. Durch eine modifizierte Zustandsspeicher-Struktur läßt sich eine Einstellung der Verzögerung um nicht ganzzahlige Vielfache des Abtastintervalles erreichen, wodurch die verwendete Entzerrerstruktur ihre praktische Bedeutung erhält.

Die wirksame Reduktion der Einstellzeit wird auch durch die adaptive Anpassung der Schrittweiten bei den Iterationsverfahren erreicht, welche nach Maßgabe einer Zielfunktion aufgestellt werden kann. Dabei erfolgt die Einstellung der Entzerrerparameter im laufenden Betrieb durch eine Minimierung der quadratischen Abweichung am Entzerrerausgang nach dem Gradientenverfahren, wobei die weitgehend konstante komplexe Einhüllende des ungestörten FM-Signals als "Referenzsignal" verwendet wird.

Verzeichnis der wichtigsten Formelzeichen
- - - - - - - - - - - - - - - - - - - -

$e(k)$ Fehler am Entzerrerausgang

$f_A$ Abtastfrequenz

$f_I$ Modulationsfrequenz

$F$ Zielfunktion

$\Delta F$ Frequenzhub

$g(k)$ komplexes FM-Basisbandsignal

14

h(k) komplexe Impulsantwort eines Entzerrers zur Kompensation von Mehrwegeempfang

h Koeffizientenvektor

$\bar{H}_{MW}(jw)$ Übertragungsfunktion eines durch Mehrwegeübertragung gestörten Kanals

k normierte Zeitvariable bei zeitdiskreten Systemen

m Ordnung der Polynomapproximation zur Interpolation

n Filterlänge

$r_\nu$ komplexe Reflexionsfaktoren bei Mehrwegeübertragung

T Abtastintervall

w(k) zeitdiskretes Demodulator-Ausgangssignal

x(k) komplexes Eingangssignal des Mehrwegeentzerrers

x komplexer Zustandsvektor

$\bar{y}(k)$ komplexes Entzerrer-Ausgangssignal

$\alpha_{\mu\nu}$ Interpolationskoeffizienten

$\beta$ Optimierungsfaktor

$\gamma_\nu$ Schrittweiten zur Optimierung der Einstellalgorithmen

$x$ auf T bezogene Verzögerung

$\omega$ Kreisfrequenz

$\Delta\Omega$ Kreisfrequenzhub

$\rho_\nu$ Amplitude reflektierter Wellen

$\tau_\nu$ Lauzeit reflektierter Wellen

$\theta_\nu$ Phasendrehung reflektierter Wellen

$\psi_\nu$ Phasendrehung reflektierter Wellen nach der Basisbandmischung

Sonderzeichen
– – – – – – – –

[x] größte ganze Zahl, die kleiner oder gleich x ist

$\bar{x}$ konjugierter Spaltenvektor

$x^T$ Zeilenvektor

$\bar{x}^*$ konjugierter Zeilenvektor

**Patentansprüche**

1. UKW-Autoradio mit digitaler Signalverarbeitung, die eine Signalentzerrung durch ein digitales, nichtrekursives Filter (10) mit einer unter Zugrundelegung der Kompensation von Verzerrungen beim Zweiwegeempfang modifizierten Entzerrerstruktur für die während einer Fahrtstrecke auftretenden Verzerrungen durch Mehrwegeempfang umfaßt, wobei in dem Filter die Entzerrerkoeffizienten, die von Vielfachen von der auf das Abtastintervall (T) bezogenen Verzögerung (x) der reflektierten Welle abweichen, gleich Null sind,

dadurch gekennzeichnet,

daß Mittel zur laufend adaptiven Einstellung der verbleibenden Entzerrerkoeffizienten (h(k)) und der normierten, auf das Abtastintervall bezogenen Verzögerung (x) nach dem Gradienten-Verfahren mit der Zielfunktion

$$F = \tfrac{1}{4}\,[|y(k)|^2 - 1]^2$$

vorgesehen sind, wobei y(k) das Entzerrerausgangssignal ist.

2. UKW-Autoradio nach Anspruch 1,

dadurch gekennzeichnet,

daß eine Koeffizienten-Iterationsschaltung vorgesehen ist, welche die Entzerrerkoeffizienten (h(k)) nach der Iterationsvorschrift

$$\underline{\tilde{h}}(i+1) = \underline{\tilde{h}}(i) - \gamma_1 \bullet e(k)\, y(k)\, \underline{\bar{x}}$$

ermittelt, wobei $\tilde{h}$ einen modifizierten Koeffizientenvektor, i den Iterationszyklus, $\gamma_1$ die Schrittweite, e(k) den Fehler am Entzerrerausgang (Abweichung) und $\bar{x}$ einen konjugiert komplexen Zustandsvektor

15

bedeuten.

3. UKW-Autoradio nach Anspruch 1,
dadurch gekennzeichnet,
daß die adaptive Einstellung der Entzerrerkoeffizienten (h(k)) in Abhängigkeit des komplexen Reflexionsfaktors (r) mittels einer Tabelle (178) erfolgt.

4. UKW-Autoradio nach Anspruch 1,
dadurch gekennzeichnet,
daß eine Verzögerungsiterationsschaltung vorgesehen ist, die die Verzögerung ($x$) nach der Iterationsvorschrift

$$\kappa^e(i+1) = \kappa^e(i) - \gamma_4 \bullet e(k) \bullet Re\ \{y(k)\ \tilde{\underline{h}}^*\underline{x}_\kappa\}$$

ermittelt, wobei $x^e$ die normierte Verzögerung am Empfänger, $\gamma_4$ die Schrittweite beim Gradientenverfahren, e(k) den Fehler am Entzerrerausgang, Re den Realteil, $\tilde{\underline{h}}$ den Koeffizientenvektor und $\underline{x}$ den Zustandsvektor bedeuten.

5. UKW-Autoradio nach Anspruch 4,
dadurch gekennzeichnet,
daß für nicht ganzzahlige Werte der Verzögerung ($x$) der zugehörige Zustandswert durch Interpolation näherungsweise bestimmt wird.

## Claims

1. VHF car radio having digital signal processing which comprises signal equalisation by means of a digital, non-recursive filter (10) having an equaliser structure, which is modified during two-path reception on the basis of compensation for distortion, for the distortion which occurs while driving as a result of multi-path reception, the equaliser coefficients, which deviate from multiples of the delay ($x$) of the reflected wave related to the sampling interval (T), being equal to zero in the filter, characterised in that means are provided for the continuously adaptive adjustment of the remaining equaliser coefficients (h(k)) and of the normalised delay ($x$), related to the sampling interval, in accordance with the gradient process, by means of the objective function

$$F = \tfrac{1}{4}\,[|y(k)|^2 - 1]^2$$

y(k) being the equaliser output signal.

2. VHF car radio according to Claim 1, characterised in that a coefficient iteration circuit is provided, which determines the equaliser coefficients (h(k)) in accordance with the iteration instruction

$$\underline{\tilde{h}}(i+1) = \underline{\tilde{h}}(i) - \gamma_1 \bullet e(k)\ y(k)\ \underline{\tilde{x}}$$

with $\underline{\tilde{h}}$ being a modified coefficient vector, i being the iteration cycle, $\gamma_1$ being the step width, e(k) being the error at the equaliser output (deviation) and $\underline{x}$ being a conjugate-complex state vector.

3. VHF car radio according to Claim 1, characterised in that the adaptive adjustment of the equaliser coefficients (h(k)) takes place as a function of the complex reflection factor (r), by means of a table (178).

4. VHF car radio according to Claim 1, characterised in that a delay iteration circuit is provided, which determines the delay ($x$) in accordance with the iteration instruction

$$\kappa^{e}(i+1) = \kappa^{e}(i) - \gamma_{4} \bullet e(k) \bullet Re \{y(k) \underline{\tilde{h}} * \underline{\bar{x}}_{\kappa}\}$$

$x^{e}$ being the normalised delay at the receiver, $\gamma_4$ being the step width in the case of the gradient process, e(k) being the error at the equaliser output, Re being the real part, $\underline{\tilde{h}}$ being the coefficient vector, and $\underline{x}$ being the state vector.

5. VHF car radio according to Claim 4, characterised in that, for non-integer values of the delay ($x$), the associated state value is determined approximately by interpolation.

**Revendications**

1. Auto-radio à modulation de fréquence avec traitement numérique des signaux assurant une égalisation des signaux par un filtre numérique (10) non récurant avec une structure d'égaliseur modifiée par la réception à deux chemins, en utilisant la compensation des distorsions, pour les distorsions par réception de plusieurs chemins, se produisant pendant un déplacement, les coefficients de correction dans le filtre, qui sont différents de multiples de la temporisation (K) de l'onde réfléchie, temporisation rapportée à l'intervalle de détection (T), sont nuls, auto-radio caractérisé par des moyens pour un réglage continu par adaptation des coefficients de correction restant (H(k)) et du retard normalisé (k) rapporté à l'intervalle de détection, selon le procédé par gradient avec la fonction de destination :

$$F = \tfrac{1}{4} [|y(k)|^2 - 1]^2$$

fonction dans laquelle y(k) est le signal de sortie de l'égaliseur.

2. Auto-radio MF selon la revendication 1, caractérisé par un circuit d'itération des coefficients qui détermine les coefficients de correction (h(k)) selon la prescription d'itération :

$$\underline{\tilde{h}}(i+1) = \underline{\tilde{h}}(i) - \gamma_{1} \cdot e(k) \ y(k) \ \underline{\bar{x}}$$

formule dans laquelle $\underline{\tilde{h}}$ représente un vecteur de coefficients modifiés, i le signal d'itération, $\gamma_1$ la largeur de pas, e(k) l'erreur à la sortie de l'égaliseur (déviation) et $\underline{x}$ un vecteur d'état complexe conjugué.

3. Auto-radio MF, selon la revendication 1, caractérisé en ce que le réglage adaptatif des coefficients de correction (h(k)) se fait en fonction du coefficient de réflexion complexe (r) à l'aide d'un tableau (178).

4. Auto-radio MF, selon la revendication 1, caractérisé par un circuit d'itération de temporisation qui détermine la temporisation (k) selon la prescription d'itération :

$$k^{e}(i+1) = k^{e}(i) - \gamma_{4} \cdot e(k) \cdot Re \{y(k) \ \underline{\tilde{h}} * \underline{\bar{x}}_{k}\}$$

dans laquelle $x^{e}$ est la temporisation normée sur le récepteur, $\gamma_4$ la largeur de pas pour le procédé par gradient, e(k) l'erreur à la sortir de l'égaliseur, Re la partie réelle, $\underline{\tilde{h}}$ le vecteur des coefficients, $\underline{x}$ le vecteur d'état.

5. Auto-radio MF, selon la revendication 4, caractérisé en ce que, pour des valeurs de nombreux nombres entiers de la temporisation (k), on détermine la valeur d'état correspondante, de manière approchée ipar interpolation.

EP 0 231 487 B1

$x(k)$ ⟹ | Komplexes FIR-Filter | $y(k)$ → | FM-Demodulator | → $w(k)$

10    12

FIG. 1

$x_r(k)$

14    16    18    10

$Z^{-x^e}$    $Z^{-x^e}$    $\cdots$    $Z^{-x^e}$

30  32    34  36    38    40

$-\tilde{h}_{io}(k)$    $\tilde{h}_{ro}(k)$    $-\tilde{h}_{i1}(k)$    $\tilde{h}_{r1}(k)$    $-\tilde{h}_{i(n-1)}(k)$    $\tilde{h}_{r(n-1)}(k)$

26
+ → $y_r(k)$

28
+ → $y_i(k)$

$\tilde{h}_{ro}(k)$    $\tilde{h}_{io}(k)$    $\tilde{h}_{r1}(k)$    $\tilde{h}_{i1}(k)$    $\tilde{h}_{r(n-1)}(k)$    $h_{i(n-1)}(k)$

42    44    46    48    50    52

$x_i(k)$

$Z^{-x^e}$    $Z^{-x^e}$    $\cdots$    $Z^{-x^e}$

20    22    24

FIG. 2

FIG. 3

FIG. 4

FIG. 5

EP 0 231 487 B1

$p^e(k)$

$\Psi^e(k)$

EPROM

128

$h_{r\nu}(k)$

$h_{i\nu}(k)$

$h_{pr\nu}(k)$

$\nu/p^e(k)$

$h_{pi\nu}(k)$

$\nu/p^e(k)$

$h_{\Psi r\nu}(k)$

$\nu$

$h_{\Psi i\nu}(k)$

$\nu$

FIG.6

130    132    $x(k-[\nu\varkappa^e])$    134    136

$x(k-[\nu\varkappa^e]+2)$  $z^{-1}$   $z^{-1}$   $z^{-1}$   $z^{-1}$  $x(k-[\nu\varkappa^e]-2)$

138    140    142    144    146

$a_{0\nu}$    $a_{1\nu}$    $a_{2\nu}$    $a_{3\nu}$    $a_{4\nu}$

148

$x(k-\nu\varkappa^e)$

FIG.7

21

FIG. 8

FIG. 9

FIG. 10

EP 0 231 487 B1

FIG. 11

FIG. 14

FIG. 15

FIG.12

FIG. 13

**FIG. 16**

**FIG. 17**

**FIG. 18**

FIG. 19

FIG. 20

FIG. 21

FIG. 22

FIG. 23

FIG. 24

FIG. 25